# EUROPEAN PATENT APPLICATION

(11) **EP 4 353 994 A1**
(43) Date of publication of application: **17.04.2024**
(21) Application number: 22824152.7
(22) Date of filing: 13.06.2022
(51) Int. Cl.: F16H 48/22

(54) **METHOD AND SYSTEM FOR CONTROLLING DIFFERENTIAL LOCK IN WADING MODE, AND VEHICLE**

(30) Priority: 17.06.2021 CN 202110674856
(71) Applicant: Great Wall Motor Company Limited, Baoding, Hebei 071000 (CN)
(72) Inventor: HUANG, Xuning, Baoding, Hebei 071000 (CN)
(74) Representative: Klunker IP Patentanwälte PartG mbB
(86) International application number: PCT/CN2022/098387
(87) International publication number: WO 2022/262672

(57) **Abstract**

The present application provides a method and system for controlling differential locks in wading modes and a vehicle. The method includes: receiving a controlling request; according to the controlling request, determining a current state of a vehicle; and when the current state of the vehicle is in a preset state, in response to the controlling request, controlling at least one of a center differential lock and a rear-axle differential lock to be locked up, to control the vehicle to be in a wading mode corresponding to the controlling request. The method of the present application aims at solving the problem of serious sideslip caused by the high-speed four-wheel-driven driving in the wading mode, and solving the problem that, in the wading mode, during the low-speed four-wheel-driven driving, the vehicle steering is restricted, which causes that, when the vehicle steering does not reach the steering required by the driver, the possibility of unpredictable risks is increased.

## Description

### CROSS REFERENCE TO RELEVANT APPLICATIONS

The present application claims the priority of the Chinese patent application filed on June 17th, 2021 before the China National Intellectual Property Administration with the application number of 202110674856.7 and the title of "METHOD AND SYSTEM FOR CONTROLLING DIFFERENTIAL LOCK IN WADING MODE, AND VEHICLE", which is incorporated herein in its entirety by reference.

### TECHNICAL FIELD

The present application relates to the technical field of vehicle engineering, and particularly relates to a method and system for controlling differential locks in wading modes and a vehicle.

### BACKGROUND

When the vehicle is in a wading working condition, the wading modes of a vehicle are driving modes that are more beneficial to the pitfall escaping of the vehicle.

Currently, the wading modes are classified into a high-speed four-wheel-driven wading mode and a low-speed four-wheel-driven wading mode. In the high-speed four-wheel-driven wading mode, the high-speed four-wheel-driven driving of the vehicle will cause serious sideslip, which easily causes the vehicle to be trapped, and increases the possibility of unpredictable risks. In the low-speed four-wheel-driven wading mode, the vehicle steering is restricted, when the vehicle steering does not reach the steering required by the driver, the possibility of unpredictable risks is increased.

### SUMMARY

In view of the above, the present application provides a method and system for controlling differential locks in wading modes and a vehicle, to solve the problem of serious sideslip caused by the high-speed four-wheel-driven driving in the wading modes, and to solve the problem that, in the wading modes, during the low-speed four-wheel-driven driving, the vehicle steering is restricted, which causes that, when the vehicle steering does not reach the steering required by the driver, the possibility of unpredictable risks is increased.

In order to achieve the above objects, the technical solutions of the present application are realized as follows:
a method for controlling differential locks in wading modes, including:
receiving a controlling request;
according to the controlling request, determining a current state of a vehicle; and
when the current state of the vehicle is in a preset state, in response to the controlling request, controlling at least one of a center differential lock and a rear-axle differential lock to be locked up, to control the vehicle to be in a wading mode corresponding to the controlling request.

Optionally, after the step of controlling at least one of the center differential lock and the rear-axle differential lock to be locked up, the method further comprises:
controlling the at least one locked-up differential lock to maintain a locking-up state, until a next time of the controlling request is received.

Optionally, the step of, when the current state of the vehicle is in the preset state, in response to the controlling request, controlling at least one of the center differential lock and the rear-axle differential lock to be locked up, to control the vehicle to be in the wading mode corresponding to the controlling request comprises:
when the controlling request is a high-speed-wading controlling request, in response to the high-speed-wading controlling request, controlling the center differential lock to be locked up, to control the vehicle to be in a high-speed-wading mode corresponding to the high-speed-wading controlling request; and
when the controlling request is a low-speed-wading controlling request, and when it is determined that the current state of the vehicle is in the preset state, in response to the low-speed-wading controlling request, controlling the center differential lock and the rear-axle differential lock to be locked up, to control the vehicle to be in a low-speed-wading mode corresponding to the low-speed-wading controlling request.

Optionally, the method further comprises: when the vehicle satisfies that a vehicle speed of the vehicle is less than a preset speed, a difference of rotational speeds of a rear left wheel and a rear right wheel of the vehicle is greater than a preset speed difference, and a steering assist system of the vehicle is in an off-state at the same time, determining that the current state of the vehicle is in the preset state.

As compared with the related art, the method for controlling differential locks in wading modes according to the present application has the following advantages:
In the method for controlling differential locks in wading modes according to the present application, in the high-speed-wading mode, merely the center differential lock is locked up, but the rear-axle differential lock is not locked up by linkage, thereby preventing the problem of sideslip during the high-speed four-wheel-driven driving in the wading mode caused by locking-up of the rear-axle differential lock. In the low-speed-wading mode, merely the center differential lock and the rear-axle differential lock are locked up, but the front-axle differential lock is not locked up by linkage, thereby preventing the problem that, in the wading mode, during low-speed driving, the vehicle steering is restricted due to locking-up of the front-axle differential lock, which causes that, when the vehicle steering does not reach the steering required by the driver, the possibility of unpredictable risks is increased.

In the method for controlling differential locks in wading modes according to the present application, when the differential locks that are locked up do not further receive an unlocking instruction from the user, the differential locks that are locked up are always in the locking-up state. That prevents the problem that, in the wading mode, the differential locks are unlocked when the unlocking speed is reached, at which point the vehicle is in the slipping state, and the actual speed of the vehicle does not reach the vehicle speed displayed in the vehicle, which results in decrease of the pitfall-escaping capacity of the vehicle.

Furthermore, in the method for controlling differential locks in wading modes according to the present application, in the low-speed-wading mode, after the corresponding controlling request is received, merely when it is satisfied that the vehicle is in the set state, the center differential lock and the rear-axle differential lock are locked up, at which point the vehicle enters the low-speed-wading mode. That prevents the problem that, when the vehicle is in a working condition that does not satisfy entering the low-speed-wading mode, the vehicle enters the low-speed-wading mode, which increases the possibility of unpredictable risks to the vehicle.

Another object of the present application is to provide a system for controlling differential locks in wading modes, to solve the problem of serious sideslip caused by the high-speed four-wheel-driven driving in the wading mode, and to solve the problem that, in the wading mode, during the low-speed four-wheel-driven driving, the vehicle steering is restricted, which causes that, when the vehicle steering does not reach the steering required by the driver, the possibility of unpredictable risks is increased.

In order to achieve the above object, the technical solutions of the present application are realized as follows:
a system for controlling differential locks in wading modes, including:
a request receiving module configured for receiving a controlling request;
a determining module configured for, according to the controlling request, determining a current state of a vehicle; and
a controlling module configured for, when the current state of the vehicle is in a preset state, in response to the controlling request, controlling at least one of a center differential lock and a rear-axle differential lock to be locked up, to control the vehicle to be in a wading mode corresponding to the controlling request.

The system for controlling differential locks in wading modes has the same advantages as those of the above method for controlling differential locks in wading modes over the related art, which are not discussed further herein.

Another object of the present application is to provide a computer-readable storage medium, storing a computer program, and when the program is executed by a processor, the steps of the method for controlling differential locks in wading modes according to the present application is implemented.

Another object of the present application is to provide an electronic device, including a memory, a processor and a computer program stored in the memory and executable in the processor, wherein the processor executes to implement the steps of the method for controlling differential locks in wading modes according to the present application.

Another object of the present application is to provide a vehicle, to solve the problem of serious sideslip caused by the high-speed four-wheel-driven driving in the wading mode, and to solve the problem that, in the wading mode, during the low-speed four-wheel-driven driving, the vehicle steering is restricted, which causes that, when the vehicle steering does not reach the steering required by the driver, the possibility of unpredictable risks is increased.

In order to achieve the above object, the technical solutions of the present application are realized as follows:
a vehicle, including the system for controlling differential locks in wading modes stated above.

The vehicle has the same advantages as those of the above method for controlling differential locks in wading modes over the prior art, which are not discussed further herein.

### BRIEF DESCRIPTION OF THE DRAWINGS

The drawings, which form part of the present application, are intended to provide a further understanding of the present application. The illustrative embodiments of the present application and their explanation are intended to interpret the present application, and do not inappropriately limit the present application. In the drawings:
FIG. 1 is a flow chart of a method for controlling differential locks in wading modes according to an embodiment of the present application;
FIG. 2 is a diagram of a control strategy of the electrically controlled differential locks of a method for controlling differential locks in wading modes according to an embodiment of the present application;
FIG. 3 is a schematic diagram of the low-speed-wading controlling request in a method for controlling differential locks in wading modes according to an embodiment of the present application;
FIG. 4 is a schematic diagram of a system for controlling differential locks in wading modes according to an embodiment of the present application;
FIG. 5 is a structural block diagram of an electronic device according to an embodiment of the present application; and
FIG. 6 is a schematic diagram of a hardware structure of an electronic device according to an embodiment of the present application.

### DETAILED DESCRIPTION

It should be noted that in the absence of conflict, the embodiments and the features of the embodiments of the present application may be combined.

The present application will be described in detail below with reference to the drawings and the embodiments.

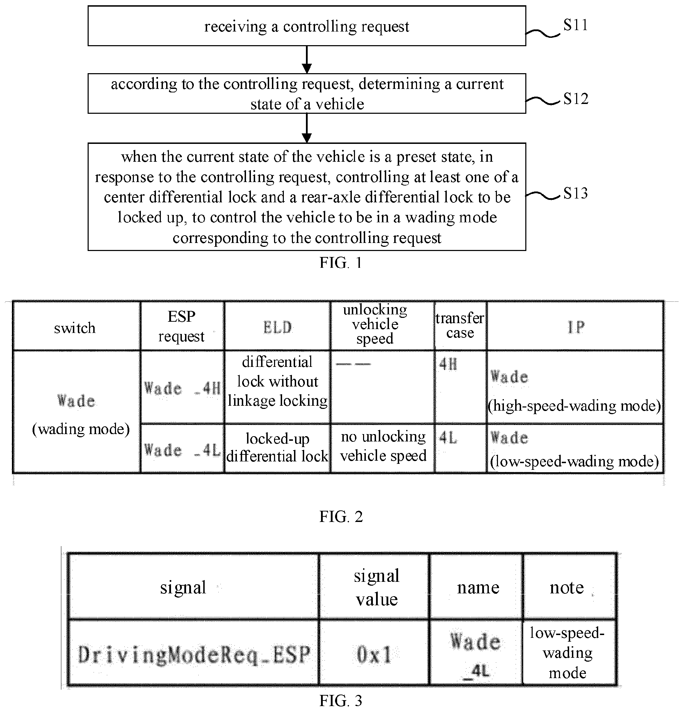

FIG. 1 is a flow chart of a method for controlling differential locks in wading modes according to an embodiment of the present application. Referring to FIG. 1, the method for controlling differential locks in wading modes according to the present application comprises the following steps:
Step S11: receiving a controlling request.

In the present embodiment, the user, by using a triggering operation, controls a vehicle-body-stability controlling system ESP to send a controlling request, and the electronic differential locks in the vehicle receive the controlling request.

Step S12: according to the controlling request, determining a current state of a vehicle.

In the present embodiment, the electronic differential locks, after receiving the controlling request, are required to determine the current state of the vehicle, and, according to the current state of the vehicle, determine whether the vehicle in the current state satisfies switching to the wading mode corresponding to the controlling request.

Step S13: when the current state of the vehicle is in a preset state, in response to the controlling request, controlling at least one of a center differential lock and a rear-axle differential lock to be locked up, to control the vehicle to be in a wading mode corresponding to the controlling request.

In the present embodiment, when it is determined that the current state of the vehicle is in the preset state that satisfies switching to the wading mode corresponding to the controlling request, the electronic differential locks in the vehicle, in response to the controlling request, perform a locking-up operation, and the electronic differential locks that complete the locking-up operation control the vehicle to enter the wading mode corresponding to the controlling request.

In the present application, the step of, when the current state of the vehicle is in the preset state, in response to the controlling request, controlling at least one of the center differential lock and the rear-axle differential lock to be locked up, to control the vehicle to be in the wading mode corresponding to the controlling request includes: when the controlling request is a high-speed-wading controlling request, in response to the high-speed-wading controlling request, controlling the center differential lock to be locked up, to control the vehicle to be in a high-speed-wading mode corresponding to the high-speed-wading controlling request; and when the controlling request is a low-speed-wading controlling request, and when it is determined that the current state of the vehicle is in the preset state, in response to the low-speed-wading controlling request, controlling the center differential lock and the rear-axle differential lock to be locked up, to control the vehicle to be in a low-speed-wading mode corresponding to the low-speed-wading controlling request.

In the present embodiment, when the controlling request received by the electronic differential locks is the high-speed-wading controlling request, it is not required to determine whether the current state of the vehicle is in the preset state. The electronic differential locks respond to the high-speed-wading controlling request, the center differential lock of the electronic differential locks is locked up, but the rear-axle differential lock is not locked up by linkage. The center differential lock, after being locked up, controls the vehicle to enter the high-speed-wading mode corresponding to the high-speed-wading controlling request. The vehicle in the high-speed-wading mode can perform the high-speed four-wheel-driven driving in a wading environment, and does not easily have sideslip, which prevents the problem that, when the vehicle is in a wading environment, during high-speed driving, because the rear-axle differential lock is locked up, sideslip is caused by synchronous rotation of the two rear wheels of the vehicle.

When the controlling request received by the electronic differential locks is the low-speed-wading controlling request, it is required to determine whether the current state of the vehicle is in the preset state. After the electronic differential locks receive the low-speed-wading controlling request, when it is determined that the current state of the vehicle is in the preset state that satisfies switching to the low-speed-wading mode, the electronic differential locks respond to the low-speed-wading controlling request, and the center differential lock and the rear-axle differential lock of the electronic differential locks are locked up by linkage. After being locked up by linkage, the center differential lock and the rear-axle differential lock, control the vehicle to enter the low-speed-wading mode corresponding to the low-speed-wading controlling request. The vehicle in the low-speed-wading mode can perform the low-speed four-wheel-driven driving in a wading environment, and the vehicle steering is no longer restricted, whereby the possibility of unpredictable risks to the vehicle is reduced.

In the method for controlling differential locks in wading modes according to the present application, it is required that, merely when the current state of the vehicle is in the preset state that satisfies switching to the low-speed-wading mode, the vehicle can switch to the low-speed-wading mode according to the controlling instruction, which prevents the problem that, when the vehicle is in a working condition that does not satisfy entering the low-speed-wading mode, the vehicle enters the low-speed-wading mode, which increases the possibility of unpredictable risks to the vehicle.

In the present application, after the step of controlling at least one of the center differential lock and the rear-axle differential lock to be locked up, the method further includes:
controlling the at least one locked-up differential lock to maintain a locking-up state, until a next time of the controlling request is received.

In the present embodiment, the vehicle very easily slips in various wading modes. During the slipping of the vehicle, the actual vehicle speed of the vehicle does not reach the vehicle speed displayed in the vehicle, at which point, after the displayed vehicle speed of the vehicle reaches the unlocking vehicle speed of the electronic differential locks, the unlocking operation is completed, and at the same time the differential locks that are unlocked will not be locked again. Therefore, when the vehicle is actually in the slipping state, and the actual vehicle speed of the vehicle does not reach the unlocking vehicle speed of the electronic differential locks, the electronic differential locks are automatically unlocked, which will reduce the pitfall-escaping capacity of the vehicle in the slipping state when the vehicle is in a wading environment. However, in the present application, after the vehicle controls the electronic differential locks in the vehicle to be locked up according to the controlling request, the electronic differential locks that are controlled to be locked up always maintain the locking-up state, until the driver presses the unlocking switch. Alternatively, after the vehicle-body stabilizing system sends an unlocking controlling instruction for exiting the current wading mode, the electronic differential locks that are currently locked up perform the unlocking operation according to the received unlocking controlling instruction. Accordingly, that enhances the pitfall-escaping capacity of the vehicle in the slipping state when the vehicle is in a wading environment.

In the present application, when the vehicle satisfies that a vehicle speed of the vehicle is less than a preset speed, a difference of rotational speeds of a rear left wheel and a rear right wheel of the vehicle is greater than a preset speed difference, and a steering assist system of the vehicle is in an off-state at the same time, it is determined that the current state of the vehicle is in the preset state.

In the present embodiment, the preset state of the vehicle is merely for the low-speed-wading mode. The vehicle speed of the vehicle is less than the preset speed, which is in order to determine whether the vehicle is in the low-speed driving process. The difference of the rotational speeds of the rear left wheel and the rear right wheel of the vehicle is greater than the preset speed difference, which is in order to determine whether the vehicle is in the slipping state, and whether a higher pitfall-escaping capacity is required. The steering assist system of the vehicle is in the off-state, which is in order to prevent the vehicle from suddenly steering at the instant of the pitfall escaping of the vehicle to cause cartwheel. When the vehicle satisfies simultaneously that the vehicle speed of the vehicle is less than the preset speed, that the difference of the rotational speeds of the rear left wheel and the rear right wheel of the vehicle is greater than the preset speed difference, and that the steering assist system of the vehicle is in the off-state, it is determined that the current state of the vehicle is in the preset state that satisfies switching to the low-speed-wading mode. After it is determined that the current state of the vehicle is in the preset state, the electronic differential locks of the vehicle respond to the received low-speed-wading controlling request, the center differential lock and the rear-axle differential lock of the electronic differential locks are locked up, and, after being locked up, the center differential lock and the rear-axle differential lock control the vehicle to enter the low-speed-wading mode.

In the present embodiment, FIG. 2 is a diagram of a control strategy of the electrically controlled differential locks of a method for controlling differential locks in wading modes according to an embodiment of the present application. FIG. 3 is a schematic diagram of the low-speed-wading controlling request in a method for controlling differential locks in wading modes according to an embodiment of the present application. Referring to FIGS. 2 and 3, the user controls the vehicle-body-stability controlling system ESP by using a switch to send the high-speed-wading controlling request Wade_4H corresponding to the high-speed-wading mode and the low-speed-wading controlling request Wade_4L corresponding to the low-speed-wading mode, and the electronic differential locks ELD respond to the controlling request sent by the vehicle-body-stability controlling system ESP. when the controlling request sent by the vehicle-body-stability controlling system ESP is the high-speed-wading controlling request Wade_4H corresponding to the high-speed-wading mode, the center differential lock of the electronic differential locks ELD responds to the Wade_4H of the high-speed-wading mode, and performs the locking-up, and, after being locked up, the center differential lock controls the vehicle to enter the high-speed-wading mode. When the controlling request sent by the vehicle-body-stability controlling system ESP is the low-speed-wading controlling request Wade_4L corresponding to the low-speed-wading mode, after it is determined that the current state of the vehicle is in the preset state, the center differential lock and the rear-axle differential lock of the electronic differential locks ELD respond to the Wade_4L of the low-speed-wading mode, and perform the locking-up, and, after being locked up, the center differential lock and the rear-axle differential lock control the vehicle to enter the low-speed-wading mode. The signal of the low-speed-wading controlling request Wade_4L is DrivingModeReq_ESP, and the signal value is 0x1.

In conclusion, the method for controlling differential locks in wading modes according to the embodiments of the present application has at least the following advantages:

In the method for controlling differential locks in wading modes according to the present application, in the high-speed-wading mode, merely the center differential lock is locked up, but the rear-axle differential lock is not locked up by linkage, thereby preventing the problem of sideslip during the high-speed four-wheel-driven driving in the wading mode caused by locking-up of the rear-axle differential lock. In the low-speed-wading mode, merely the center differential lock and the rear-axle differential lock are locked up, but the front-axle differential lock is not locked up by linkage, thereby in the wading mode, reducing the possibility of unpredictable risks since the vehicle steering is restricted due to locking-up of the front-axle differential lock.

In the method for controlling differential locks in wading modes according to the present application, when the differential locks that are locked up do not further receive an unlocking instruction from the user, the differential locks that are locked up are always in the locking-up state. That prevents the problem that, in the wading mode, the differential locks are unlocked when the unlocking speed of the differential locks is reached, at which point the vehicle might be in the slipping state, and the actual speed of the vehicle does not reach the vehicle speed displayed in the vehicle, which results in decrease of the pitfall-escaping capacity of the vehicle.

Furthermore, in the method for controlling differential locks in wading modes according to the present application, in the low-speed-wading mode, merely when it is satisfied that the vehicle is in the set state, the vehicle is controlled according to the controlling request to enter the low-speed-wading mode. That prevents the problem that, when the vehicle is in a working condition that does not satisfy entering the low-speed-wading mode, the vehicle enters the low-speed-wading mode, which increases the possibility of unpredictable risks to the vehicle.

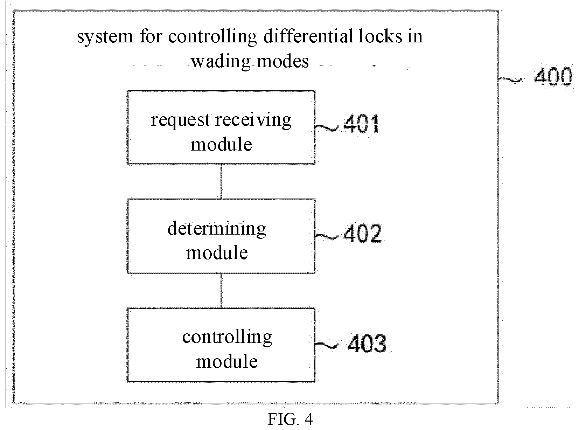

An embodiment of the present application further provides a system for controlling differential locks in wading modes. FIG. 4 is a schematic diagram of a system for controlling differential locks in wading modes according to an embodiment of the present application. Referring to FIG. 4, the system for controlling differential locks in wading modes 400 according to the present application includes:
a request receiving module 401 configured for receiving a controlling request;
a determining module 402 configured for, according to the controlling request, determining a current state of a vehicle; and
a controlling module 403 configured for, when the current state of the vehicle is in a preset state, in response to the controlling request, controlling at least one of a center differential lock and a rear-axle differential lock to be locked up, to control the vehicle to be in a wading mode corresponding to the controlling request.

The present application discloses a vehicle, wherein an operation state of the vehicle is controlled by using the system for controlling differential locks in wading modes stated above.

The embodiments of the description are described in the mode of progression, each of the embodiments emphatically describes the differences from the other embodiments, and the same or similar parts of the embodiments may refer to each other.

A person skilled in the art should understand that the embodiments of the present application may be provided as a method, a device, or a computer program product. Therefore, the embodiments of the present application may take the form of a complete hardware embodiment, a complete software embodiment, or an embodiment combining software and hardware. Furthermore, the embodiments of the present application may take the form of a computer program product implemented on one or more computer-usable storage media (including but not limited to a disk storage, a CD-ROM, an optical memory and so on) containing a computer-usable program code therein.

The embodiments of the present application are described with reference to the flow charts and/or block diagrams of the method, the terminal device (system), and the computer program product according to the embodiments of the present application. It should be understood that each flow and/or block in the flow charts and/or block diagrams, and combinations of the flows and/or blocks in the flow charts and/or block diagrams, may be implemented by a computer program instruction. The computer program instructions may be provided to a processor of a general-purpose computer, a special-purpose computer, an embedded processor, or another programmable data processing terminal device to generate a machine, so that a device for implementing the functions specified in one or more flows of the flow charts and/or one or more blocks of the block diagrams can be generated by instructions executed by the processor of the computers or the other programmable data processing terminal device.

The computer program instructions may also be stored in a computer-readable memory that can instruct the computers or the other programmable data processing terminal device to operate in a specific mode, so that the instructions stored in the computer-readable memory generate an article comprising an instruction device, and the instruction device implements the functions specified in one or more flows of the flow charts and/or one or more blocks of the block diagrams.

The computer program instructions may also be loaded to the computers or the other programmable data processing terminal device, so that the computers or the other programmable data processing terminal device implement a series of operation steps to generate the computer-implemented processes, whereby the instructions executed in the computers or the other programmable data processing terminal device provide the steps for implementing the functions specified in one or more flows of the flow charts and/or one or more blocks of the block diagrams.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Some or all of the modules may be selected according to actual demands to realize the purposes of the solutions of the embodiments. A person skilled in the art can understand and implement the technical solutions without paying creative work.

Each component embodiment of the present application may be implemented by hardware, or by software modules that are operated in one or more processors, or by a combination thereof. A person skilled in the art should understand that some or all of the functions of some or all of the components of the computing and processing device according to the embodiments of the present application may be implemented by using a microprocessor or a digital signal processor (DSP) in practice. The present application may also be implemented as apparatus or device programs (for example, computer programs and computer program products) for implementing part of or the whole of the method described herein. Such programs for implementing the present application may be stored in a computer-readable medium, or may be in the form of one or more signals. Such signals may be downloaded from an Internet website, or provided on a carrier signal, or provided in any other forms.

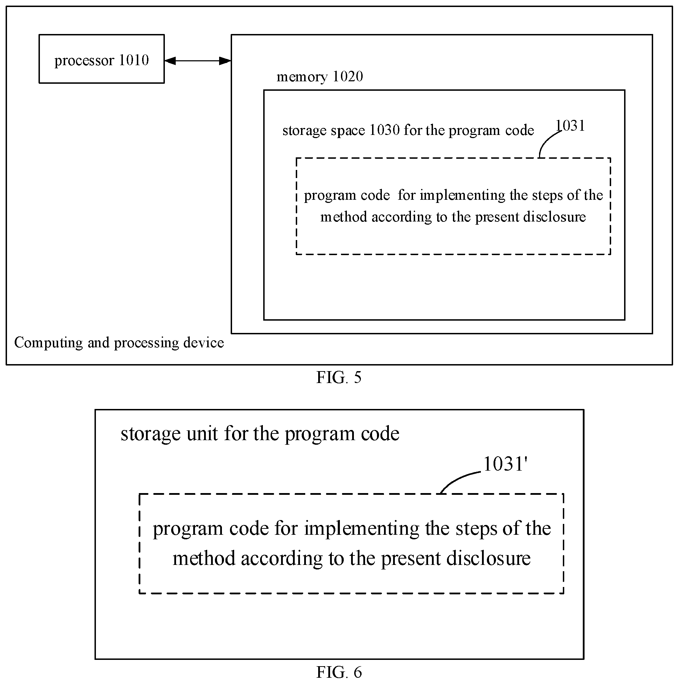

For example, FIG. 5 shows a computing and processing device that can implement the method according to the present application. The computing and processing device traditionally comprises a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 6. The storage unit may have storage segments or storage spaces with similar arrangement to the memory 1020 of the computing and processing device in FIG. 5. The program codes may, for example, be compressed in a suitable form. Generally, the storage unit contains a computer-readable code 1031', which can be read by a processor like 1010. When those codes are executed by the computing and processing device, the codes cause the computing and processing device to implement each of the steps of the method described above.

Although preferable embodiments of the embodiments of the present application are described, once a person skilled in the art has known the essential inventive concept, he may make further variations and modifications on those embodiments. Therefore, the appended claims are intended to be interpreted as including the preferable embodiments and all of the variations and modifications that fall within the scope of the embodiments of the present application.

Finally, it should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or terminal devices that include a series of elements do not only include those elements, but also include other elements that are not explicitly listed, or include the elements that are inherent to such processes, methods, articles or terminal devices. Unless further limitation is set forth, an element defined by the wording "comprising a ..." does not exclude additional same element in the process, method, article or terminal device comprising the element.

The method and system for controlling differential locks in wading modes and the vehicle according to the present application are described in detail above. The principle and the embodiments of the present application are described herein with reference to the particular examples, and the description of the above embodiments is merely intended to facilitate to comprehend the method according to the present application and its core concept. Moreover, for a person skilled in the art, according to the concept of the present application, the particular embodiments and the range of application may be varied. In conclusion, the contents of the description should not be understood as limiting the present application.

## Claims

1. A method for controlling differential locks in wading modes, **characterized in that** the method is applied to electronic differential locks, and the method comprises:
receiving a controlling request;
according to the controlling request, determining a current state of a vehicle; and
when the current state of the vehicle is in a preset state, in response to the controlling request, controlling at least one of a center differential lock and a rear-axle differential lock to be locked up, to control the vehicle to be in a wading mode corresponding to the controlling request.

2. The method according to claim 1, **characterized in that** after the step of controlling at least one of the center differential lock and the rear-axle differential lock to be locked up, the method further comprises:
controlling the at least one locked-up differential lock to maintain a locking-up state, until a next time of the controlling request is received.

3. The method according to claim 1, **characterized in that** the step of, when the current state of the vehicle is in the preset state, in response to the controlling request, controlling at least one of the center differential lock and the rear-axle differential lock to be locked up, to control the vehicle to be in the wading mode corresponding to the controlling request comprises:
when the controlling request is a high-speed-wading controlling request, in response to the high-speed-wading controlling request, controlling the center differential lock to be locked up, to control the vehicle to be in a high-speed-wading mode corresponding to the high-speed-wading controlling request; and
when the controlling request is a low-speed-wading controlling request, and when it is determined that the current state of the vehicle is in the preset state, in response to the low-speed-wading controlling request, controlling the center differential lock and the rear-axle differential lock to be locked up, to control the vehicle to be in a low-speed-wading mode corresponding to the low-speed-wading controlling request.

4. The method according to claim 1, **characterized in that** the method further comprises: when the vehicle satisfies that a vehicle speed of the vehicle is less than a preset speed, a difference of rotational speeds of a rear left wheel and a rear right wheel of the vehicle is greater than a preset speed difference, and a steering assist system of the vehicle is in an off-state at the same time, determining that the current state of the vehicle is in the preset state.

5. A system for controlling differential locks in wading modes, **characterized in that** the system comprises:
a request receiving module configured for receiving a controlling request;
a determining module configured for, according to the controlling request, determining a current state of a vehicle; and
a controlling module configured for, when the current state of the vehicle is in a preset state, in response to the controlling request, controlling at least one of a center differential lock and a rear-axle differential lock to be locked up, to control the vehicle to be in a wading mode corresponding to the controlling request.

6. An electronic device, **characterized in that** the device comprises a processor, a memory and a program or instruction stored in the memory and executable in the processor, when the program or instruction is executed by the processor, the steps of the method for controlling differential locks in wading modes according to any one of claims 1-4 is implemented.

7. A computer program, comprising a computer-readable code, **characterized in that** when the computer-readable code is executed in a computing and processing device, the computing and processing device is caused to implement the steps of the method for controlling differential locks in wading modes according to any one of claims 1-4.

8. A readable storage medium, **characterized in that** the medium stores a program or instruction, when the program or instruction is executed by a processor, the computer program according to claim 7 is implemented.

9. A vehicle, **characterized in that** an operation state of the vehicle is controlled by using the method for controlling differential locks in wading modes according to any one of claims 1-4.
